(19) **Europäisches Patentamt / European Patent Office / Office européen des brevets**

(11) **EP 2 137 327 B1**

(12) **FASCICULE DE BREVET EUROPEEN**

(45) Date de publication et mention
de la délivrance du brevet:
**02.05.2012 Bulletin 2012/18**

(51) Int Cl.:
*C21D 1/18* $^{(2006.01)}$    *C21D 6/00* $^{(2006.01)}$
*C21D 7/13* $^{(2006.01)}$    *C21D 8/02* $^{(2006.01)}$
*C21D 8/04* $^{(2006.01)}$    *C21D 9/48* $^{(2006.01)}$
*C22C 38/02* $^{(2006.01)}$    *C22C 38/04* $^{(2006.01)}$
*C22C 38/06* $^{(2006.01)}$    *C22C 38/12* $^{(2006.01)}$
*C22C 38/14* $^{(2006.01)}$    *C23C 2/06* $^{(2006.01)}$
*C23C 2/12* $^{(2006.01)}$    *C23F 17/00* $^{(2006.01)}$

(21) Numéro de dépôt: **08775621.9**

(22) Date de dépôt: **03.03.2008**

(86) Numéro de dépôt international:
**PCT/FR2008/000278**

(87) Numéro de publication internationale:
**WO 2008/132303 (06.11.2008 Gazette 2008/45)**

(54) **ACIER POUR FORMAGE A CHAUD OU TREMPE SOUS OUTIL, A DUCTILITE AMELIOREE**

STAHL FÜR WERKZEUGLOSES WARMFORMEN ODER ABSCHRECKEN MIT ERHÖHTER BIEGBARKEIT

STEEL FOR TOOL-LESS HOT FORMING OR QUENCHING WITH IMPROVED DUCTILITY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.03.2007 PCT/FR2007/000441**

(43) Date de publication de la demande:
**30.12.2009 Bulletin 2009/53**

(73) Titulaire: **ArcelorMittal France**
**93200 Saint Denis (FR)**

(72) Inventeurs:
• **LAURENT, Jean-Pierre**
**F-13800 Istres (FR)**
• **MALOT, Thierry**
**F-13200 Arles (FR)**

(74) Mandataire: **Plaisant, Sophie Marie**
**ArcelorMittal France**
**ArcelorMittal R&D**
**Intellectual Property**
**1-5 rue Luigi Cherubini**
**93200 Saint-Denis (FR)**

(56) Documents cités:
**EP-A- 1 013 785        EP-A- 1 143 029**
**EP-A- 1 146 132        EP-A- 1 195 447**
**WO-A-2006/097593    FR-A- 2 833 504**
**FR-A- 2 883 007**

## EP 2 137 327 B1

**Description**

L'invention concerne la fabrication de pièces d'acier laminé à chaud ou à froid présentant, après formage à chaud ou trempe sous outil, des propriétés de résistance, d'allongement et de résistance à la corrosion, particulièrement favorables et homogènes.

Pour certaines applications, on cherche à réaliser des pièces en acier combinant une résistance mécanique élevée, une grande résistance aux chocs et une bonne tenue à la corrosion. Ce type de combinaison est particulièrement désirable dans l'industrie automobile où l'on recherche un allègement significatif des véhicules. Ceci peut être notamment obtenu grâce à l'utilisation de pièces d'aciers à hautes caractéristiques mécaniques dont la microstructure est martensitique ou bainito-martensitique : des pièces anti-intrusion, de structure ou participant à la sécurité des véhicules automobiles telles que traverses de pare-choc, renforts de portière ou de pied milieu, nécessitent par exemple les qualités ci-dessus.

Le brevet FR2780984 divulgue ainsi une tôle d'acier revêtue d'aluminium présentant une très haute résistance après traitement thermique, ce traitement comprenant un chauffage entre Ac3 et 1200°C puis une mise en forme à chaud au sein d'un outillage. Les éléments de la composition de l'acier sont les suivants: C : 0,15-0,5%, Mn : 0,5%-3%, Si : 0,1%-0,5%, Cr :0,01-1 %, Ti < 0,2%, Al, P< 0,1 %, S< 0,05%, B : 0,0005%-0,08%. Le composé allié formé par interdiffusion du pré-revêtement et de l'acier au cours du traitement thermique assure une protection contre la décarburation et la corrosion.

Dans un exemple de réalisation, la mise en oeuvre d'un acier comprenant 0.231%C. 1,145%Mn, 0,239%Si, 0,043%Al, 0,020%P, 0,0038%S, 0,179%Cr, 0,009%Cu, 0,020%Ni, 0.032%Ti, 0,0042%N, 0,0051%Ca, 0,0028%B, permet d'obtenir après mise en forme à chaud, une résistance supérieure à 1500MPa, associée à une structure totalement martensitique.

En contrepartie de ce niveau de résistance très élevé, l'allongement à rupture est relativement faible après traitement thermique, de l'ordré de 5%. Certaines applications structurales ne nécessitent cependant pas un niveau de résistance aussi élevé mais requièrent par contre une capacité d'allongement à rupture supérieure à 15%. Ces applications requièrent également une bonne protection des pièces contre la corrosion. Tôles d'acier pour l'industrie d'automobile sont proposés dans EP1146132 et EP1195447. Les documents EP1767659, EP1143029, FR2833504 et EP1013785 divulguent le formage à chaud extreme sous outil de pièce ou flans. Ces applications structurales concernent des pièces de renfort d'épaisseur comprise entre 0,5 et 4 mm environ. On cherche à disposer d'un acier dont la résistance et l'allongement à rupture, après traitement thermique des pièces, sont respectivement supérieurs à 500MPa et à 15%. La combinaison de ces caractéristiques mécaniques assure, en cas de choc, une énergie d'absorption élevée. Ces exigences de résistance et d'allongement doivent être satisfaites même si les vitesses de refroidissement au sein d'un outillage peuvent être différentes entre des pièces d'épaisseur 0,5mm et celles d'épaisseur 4 mm environ. Ceci permettrait par exemple de ne pas changer les réglages d'une ligne industrielle comportant un chauffage et un refroidissement lorsque des pièces d'épaisseur différente, au sein de la gamme d'épaisseur ci-dessus, sont traitées successivement sur la ligne.

Par ailleurs, on sait que l'emboutissage à chaud d'une pièce ou la trempe entre outils peuvent conduire à des déformations locales plus ou moins importantes dans certaines zones. Le contact entre la pièce et l'outillage peut être plus ou moins parfait, si bien que la vitesse de refroidissement peut ne pas être identique en tout point. Ces variations locales en termes de taux de déformation ou de vitesse de refroidissement peuvent avoir pour conséquences une structure et des propriétés hétérogènes dans la pièce après traitement thermique.

La présente invention a pour but de résoudre les problèmes évoqués ci-dessus. Elle vise en particulier à mettre à disposition des pièces d'acier laminées à chaud ou à froid présentant simultanément après mise en forme à chaud ou trempe sous outil une résistance supérieure à 500MPa, un allongement à rupture supérieur à 15%, pour une gamme d'épaisseur allant de 0,5 à 4 mm environ. L'invention vise également à mettre à disposition des pièces avec une excellente homogénéité de structure et de caractéristiques mécaniques, c'est à dire dont la résistance et l'allongement ne varient pas dans les différentes parties des pièces, même si le taux de déformation locale ou la vitesse de refroidissement locale n'y est pas uniforme durant la fabrication.

L'invention vise également à mettre à disposition des pièces d'acier aisément soudables par les procédés d'assemblage usuels (soudage par résistance, arc, LASER) le soudage des pièces pouvant être réalisé soit avant, soit après mise en forme à chaud ou trempe sous outil.

Dans ce but, l'invention a pour objet une pièce en acier dont la composition comprend, les teneurs étant exprimées en poids : 0,040% ≤ C ≤ 0,100%, 0,80% ≤ Mn ≤ 2,00%, Si ≤ 0,30%, S ≤ 0,005%, P≤ 0,030%, 0,010% ≤ Al ≤ 0,070%, 0.015% ≤ Nb ≤ 0,100%, 0,030% ≤ Ti≤ 0,080%, N ≤ 0,009%, Cu ≤ 0,100%, Ni ≤ 0,100%, Cr ≤ 0,100%, Mo ≤ 0,100%, Ca ≤ 0,006%, le reste de la composition étant constitué de fer et d'impuretés inévitables résultant de l'élaboration, la microstructure de l'acier étant constituée d'au moins 75% de ferrite équiaxe, de martensite en quantité supérieure ou égale à 5% et inférieure ou égale à 20%, et de bainite en quantité inférieure ou égale à 10% L'invention a également pour objet une pièce en acier selon les caractéristiques ci-dessus, caractérisée en ce que la composition de l'acier comprend, les teneurs étant exprimées en poids : 0,050% ≤ C ≤ 0,080%, 1,20% ≤ Mn ≤ 1,70%, Si ≤ 0,070%, S ≤ 0,004%, P ≤ 0,020%, 0.020% ≤ Al ≤ 0,040%, 0,030% ≤ Nb ≤ 0,070%, 0,060% ≤ Ti ≤ 0,080%, N ≤ 0,009%, Cu ≤ 0,100%, Ni ≤ 0,100%, Cr ≤ 0,100%, Mo ≤ 0,100%. Ca ≤ 0,005%, le reste de la composition étant constitué de fer et d'impuretés inévitables résultant de l'élaboration.

Selon un mode particulier, la taille moyenne de grain ferritique de l'acier de la pièce est inférieure à 6 micromètres.

Selon un mode particulier, la pièce en acier est revêtue d'une couche alliée sur la totalité de l'épaisseur de cette couche. Cette couche alliée résulte d'au moins un traitement thermique d'alliation entre l'acier et un pré-revêtement, ce dernier étant un alliage à base de zinc ou d'aluminium.

Selon un mode préféré, la résistance de la pièce en acier est supérieure ou égale à 500MPa et son allongement à rupture est supérieur à 15%. L'invention a également pour objet un objet soudé dont l'une au moins des parties est une pièce selon l'une quelconque des caractéristiques ci-dessus. L'invention a également pour objet un procédé de fabrication d'une pièce en acier revêtu, comportant les étapes selon lesquelles on approvisionne une tôle d'acier laminée à chaud ou laminée à froid de composition ci-dessus, puis on effectue un pré-revêtement de la tôle, le pré-revêtement étant un alliage à base de zinc ou d'aluminium. On découpe la tôle pour obtenir un flan puis on soude éventuellement ce flan. On déforme éventuellement à froid le flan puis on le chauffe à une température $T_R$ dans un four de manière à former, par alliation entre l'acier et le pré-revêtement, une couche alliée à la surface du flan, l'alliation étant réalisée sur la totalité de la couche, et de manière à conférer une structure totalement austénitique à l'acier. On extrait le flan du four puis on le déforme éventuellement à chaud pour obtenir une pièce qu'on refroidit dans des conditions propres à conférer les caractéristiques mécaniques visées pour celle-ci.

L'invention a également pour objet un procédé de fabrication d'une pièce, comportant les étapes selon lesquelles on approvisionne une tôle d'acier laminée à chaud ou laminée à froid, de composition selon la revendication ci-dessus, puis on découpe la tôle pour obtenir un flan. On soude éventuellement le flan puis on déforme éventuellement à froid ce flan. On chauffe celui-ci à une température $T_R$ dans un four de manière à conférer une structure totalement austénitique à l'acier puis on extrait le flan du four. On effectue éventuellement une déformation à chaud pour obtenir une pièce puis on refroidit cette pièce dans des conditions propres à conférer les caractéristiques mécaniques visées pour celle-ci, puis on effectue éventuellement un revêtement de la pièce.

Selon un mode particulier, la température $T_R$ est comprise entre 880 et 950°C et le temps de maintien $t_R$ à cette température est compris entre 3 et 10 minutes.

Selon un mode particulier, la vitesse moyenne de refroidissement $V_R$ entre la température $T_R$ et 400°C, est comprise entre 30 et 80°C/s.

La vitesse moyenne de refroidissement $V_R$ entre la température $T_R$ et 400°C, est préférentiellement comprise entre 35 et 60°C/s.

L'invention a également pour objet l'utilisation d'une pièce ou d'un objet ci-dessus, ou fabriquée selon l'un des procédés décrits ci-dessus, pour la fabrication de pièces de structures ou de sécurité pour véhicule terrestre à moteur, pour le domaine du machinisme agricole ou de la construction navale.

D'autres caractéristiques et avantages de l'invention apparaîtront au cours de la description ci-dessous donnée à titre d'exemple et faite en référence aux figures jointes suivantes :

La figure 1 présente la microstructure d'un acier selon l'invention après traitement thermique
La figure 2 présente la microstructure d'un acier non conforme à l'invention, après traitement thermique

En ce qui concerne la composition chimique de l'acier, le carbone joue un rôle important sur la trempabilité et sur la résistance mécanique obtenue après le refroidissement qui suit le traitement d'austénitisation. Au-dessous d'une teneur de 0,040% en poids, il n'est pas possible d'obtenir une résistance supérieure à 500MPa dans toutes les conditions de refroidissement. Au delà d'une teneur de 0,100%, il existe le risque de former une proportion trop importante de martensite dans les conditions de refroidissement les plus rapides, par exemple lorsque les pièces sont maintenues au sein d'un outillage refroidi. L'allongement à rupture peut être alors inférieur à 15%. Une teneur en carbone comprise entre 0,050 et 0,080% permet d'obtenir une grande stabilisé des caractéristiques de résistance et d'allongement en fonction des conditions de fabrication ainsi qu'une très bonne soudabilité dans les procédés d'assemblage usuels.

- Outre son rôle de désoxydant, le manganèse a également un effet important sur la trempabilité en particulier lorsque sa teneur en poids est au moins de 0,80%. Au-delà de 2,00%, son caractère gammagène conduit cependant à la formation d'une structure en bandes trop marquée. Une gamme de 1,20-1,70% de Mn est préférée de façon à obtenir une trempabilité satisfaisante sans risque de ségrégation. De plus, on obtient ainsi une très bonne ténacité en conditions de sollicitation mécanique statique ou dynamique.
- Le silicium participe à la désoxydation de l'acier liquide et contribue au durcissement de l'acier. Sa teneur doit être cependant limitée pour éviter la formation excessive d'oxydes superficiels et pour favoriser la revêtabilité et la soudabilité. Une addition de plus de 0,30% en poids de silicium conduirait à une stabilisation éventuelle de l'austénite après refroidissement dans l'outillage, ce qui n'est pas recherché ici. Une teneur en silicium inférieure à 0,070% est préférée pour obtenir les résultats ci-dessus.

- En quantités excessives, le soufre et le phosphore réduisent la ductilité. C'est pourquoi leur teneur est limitée respectivement à 0,005 et 0,030 % en poids. Une teneur respectivement inférieure à 0,004 et à 0,020% permet d'augmenter plus particulièrement la ductilité et la ténacité.
- En quantité comprise entre 0,010 et 0,070% en poids, l'aluminium permet la désoxydation de l'acier liquide. Une quantité comprise préférentiellement entre 0,020 et 0,040% permet d'éviter une stabilisation éventuelle de l'austénite.

Le titane et le niobium font partie de la catégorie des éléments de micro-alliage, éléments efficaces même pour de faibles quantités allant de quelques $10^{-3}$ à quelques $10^{-2}$% :

- Lorsque la teneur en niobium de l'acier est comprise entre 0,015 et 0,100%, de fins précipités durcissants de carbonitrures Nb(CN) se forment dans l'austénite ou dans la ferrite lors du laminage à chaud. Ces précipités permettent également de limiter la croissance du grain austénitique lors d'un soudage éventuel. Une teneur en niobium comprise entre 0,030 et 0,070% permet d'obtenir un durcissement appréciable tout en accroissant modérément les caractéristiques mécaniques à haute température, ce qui permet de limiter les efforts lors du laminage à chaud sur trains à bandes.
- Lorsque la teneur en titane est comprise entre 0,030 et 0,080% en poids, une précipitation a lieu sous forme de nitrures TiN à très haute température, puis à plus basse température dans l'austénite sous forme de fins carbures TiC conduisant à un durcissement. Les précipités TiN permettent de limiter efficacement la croissance du grain austénitique lors d'éventuelles opérations de soudage. Une teneur en titane comprise entre 0,060 et 0,080% permet d'obtenir une précipitation plus intense de TiC ou de carbosulfures de titane.
- La teneur en azote est inférieure à 0,009% pour éviter une précipitation de TiN qui interviendrait dès la solidification sous une forme grossière.

Après laminage à chaud ou laminage à froid et recuit, le niobium et le titane se trouvent sous forme précipitée. Dans le procédé selon l'invention, on réalise ultérieurement une austénitisation complète de l'acier suivie d'une trempe au sein d'un outillage. Les inventeurs ont mis en évidence que les précipités, en particulier de titane, freinent effectivement la croissance du grain austénitique au chauffage et limitent la formation de constituants secondaires de grande dureté qui réduisent la ductilité. Ce contrôle de la taille du grain austénitique permet d'obtenir une faible sensibilité à la variation de la vitesse de refroidissement. - La composition de l'acier peut également comprendre des éléments tels que le cuivre, le chrome, le nickel ou le molybdène qui contribuent à l'augmentation de la résistance par durcissement en solution solide ou par leur influence sur la trempabilité. Cependant, leur teneur individuelle doit être limitée à 0,1%, sous peine de former des structures bainitiques après austénitisation en four, ces structures étant sensibles à une variation de la vitesse de refroidissement.

L'acier peut également comprendre une addition de calcium allant jusqu'à 0,006%, et préférentiellement 0,005%, dans le but de globuliser les sulfures et d'améliorer la résistance à la fatigue.

Le procédé de fabrication selon l'invention est le suivant :

- On approvisionne une tôle ou un flan découpé à partir d'une tôle d'une des compositions ci-dessus. La microstructure initiale de cette tôle joue un rôle relativement secondaire dans la mesure où une austénitisation totale intervient ultérieurement. Il faut cependant que les éléments de micro-alliage soient sous forme précipitée : on pourra par exemple fabriquer les tôles et les flans par coulée d'acier liquide suivie d'un réchauffage à 1100°C. Un laminage à chaud sera effectué avec une température de fin de laminage inférieure à 940°C. On effectuera ensuite un refroidissement jusqu'à 500-700°C avec une vitesse comprise entre 20 et 100°C/s. Après refroidissement ultérieur à l'air, la tôle sera ensuite bobinée à une température comprise entre 450 et 680°C. Ces conditions permettent d'obtenir une précipitation fine et dispersée des éléments de micro-alliage.

On peut mettre en oeuvre l'invention sur une tôle ou un flan, nu ou pré-revêtu. Dans ce dernier cas, on effectue un pré-revêtement de la tôle, le pré-revêtement étant un alliage à base de zinc ou d'aluminium. On peut notamment effectuer ce pré-revêtement par un procédé au trempé à chaud, par électrodéposition ou par un procédé de dépôt sous vide. Le dépôt peut être réalisé en une seule étape ou par combinaison d'étapes successives. Le dépôt est effectué préférentiellement en continu. L'épaisseur de ce pré-revêtement peut être comprise entre 5 et 35 micromètres dans le but d'obtenir un revêtement résistant aux conditions de mise en oeuvre.

L'alliage du pré-revêtement peut être de l'aluminium ou un alliage à base d'aluminium : on peut effectuer par exemple le pré-revêtement par trempé à chaud dans un bain à base d'aluminium comportant en outre 8 à 11 % en poids de silicium et 2 à 4% de fer.

L'alliage du pré-revêtement peut être également du zinc ou un alliage à base de zinc. Cet alliage de zinc peut également contenir de l'aluminium, par exemple en quantité allant jusqu'à 5% en poids. L'alliage à base de zinc peut également contenir à titre optionnel un ou plusieurs éléments tels que le silicium, le plomb, l'antimoine, le bismuth, le lanthane ou le cérium.

- La tôle pré-revêtue est ensuite découpée pour obtenir un flan de géométrie en rapport avec celle de la pièce finale à obtenir.
- Selon une variante de l'invention, on soude optionnellement le flan pré-revêtu à d'autres éléments en acier. On sait en effet que certaines applications ne requièrent pas le même niveau de caractéristiques mécaniques en tout point des pièces. On a ainsi assisté à un développement des flans raboutés, qui sont des assemblages à partir de tôles d'aciers présentant éventuellement des compositions ou des épaisseurs différentes. Le flan pré-revêtu selon l'invention peut ainsi être incorporé par soudage au sein d'un ensemble plus complexe. Le soudage peut être effectué par un procédé continu, par exemple par faisceau LASER, à l'arc électrique, ou par un procédé discontinu tel que par exemple le soudage par résistance par points. Le flan peut être assemblé à un ou plusieurs autres flans en acier dont la composition et l'épaisseur peuvent être identiques ou différentes, de façon à obtenir au stade final des pièces dont les caractéristiques mécaniques, après mise en forme et traitement thermique, varient en leur sein et sont adaptées localement aux sollicitations ultérieures. Outre le fer et les inévitables impuretés, la composition en poids des flans d'acier assemblés au flan selon l'invention comprendra par exemple : C :0,040-0,25%C, 0,8-2%Mn, Si≤0,4%, Al ≤0,1%.

- Selon une autre variante de l'invention, on déforme éventuellement à froid le flan pré-revêtu. Cette déformation peut être réalisée de façon à se rapprocher à un degré plus ou moins grand de la géométrie finale de la pièce que l'on veut obtenir. Dans le cas d'une faible déformation à froid, celle-ci pourra être complétée par une déformation effectuée à chaud, comme il sera exposé plus loin. Dans le cas où la déformation à froid conduit pratiquement à la géométrie finale, on chauffe ensuite la pièce puis on fait subir à celle-ci une étape de conformation au sein d'un outillage. Cette dernière étape vise à éviter les déformations éventuelles des pièces au refroidissement et à assurer un cycle de refroidissement particulier grâce à un contact adapté entre la pièce et l'outillage. Cette étape de conformation est donc caractérisée par un effort appliqué minime de l'outillage sur la pièce.
- Après ces étapes optionnelles de soudage et de déformation à froid, on chauffe le flan dans un four de traitement thermique. Ce traitement a pour but de réaliser une austénitisation complète de l'acier. Dans le cas où le flan est pré-revêtu, ce traitement a également pour but de former un revêtement apte à protéger sa surface pendant le traitement et lors de l'utilisation ultérieur de la pièce.

Le rôle du pré-revêtement à base d'aluminium ou de zinc est le suivant : lors du chauffage en four, une réaction d'alliation entre le substrat en acier et lé pré-revêtement se produit et une couche alliée se forme à la surface du flan. L'alliation intervient sur la totalité de l'épaisseur du pré-revêtement. En fonction de la composition du pré-revêtement, on forme une ou plusieurs phases intermétalliques dans cette couche alliée. La température de fusion de ces phases étant supérieure à la température à laquelle est portée la pièce, le revêtement ne fond pas à haute température. On désigne par le terme de « pré-revêtement » l'alliage avant chauffage, et par « revêtement » la couche alliée formée lors du chauffage. Le traitement thermique modifie donc la nature du pré-revêtement et sa géométrie, puisque l'épaisseur du revêtement est supérieure à celle du pré-revêtement en raison des réactions de diffusion vers le substrat d'acier. Comme on l'a vu, le traitement thermique forme une couche résistant à la température. Cette couche protège le substrat en évitant le contact avec l'atmosphère du four. En conséquence, on évite les problèmes de décarburation ou d'oxydation qui interviendraient si le chauffage était effectué sur une pièce sans pré-revêtement. Les revêtements formés présentent également l'avantage d'être adhérents et d'être adaptés aux opérations éventuelles de mise en forme à chaud qui vont suivre.

Le chauffage est effectué à une température $T_R$ supérieure à Ac3, cette dernière température désignant la température de fin de transformation austénitique de l'acier au chauffage. La température $T_R$ est comprise de préférence entre 880 et 950°C. Un maintien $t_R$ de 3 à 10 minutes à $T_R$ peut être réalisé de façon à homogénéiser la température du flan. Dans ces conditions, un grain austénitique fin est formé dans cette gamme de température légèrement au dessus de Ac3. La trempabilité est modérée à partir d'une telle structure, ce qui permet d'éviter la formation de constituants microstructuraux à faible ductilité. Une variation de température au sein de cet intervalle n'entraîne pas une grande variabilité des propriétés mécaniques finales.

Le flan chauffé est ensuite extrait du four et transféré au sein d'un outillage où l'on effectue soit une déformation à chaud en vue d'obtenir la géométrie désirée pour la pièce, soit une simple conformation comme on l'a décrit plus haut. Bien entendu, si le flan n'a pas été déformé préalablement, c'est au stade de la déformation à chaud que la déformation sera entièrement réalisée. Dans les deux cas, la présence de la pièce au sein de l'outillage conduit à un refroidissement qui intervient essentiellement par conduction thermique. La vitesse de refroidissement dépend de paramètres tels que le temps de transfert entre le four et l'outillage, l'épaisseur et la température de la pièce, le refroidissement éventuel de l'outillage lui-même par un fluide caloporteur, le maintien plus ou moins long de la pièce dans l'outillage. Selon une variante, la pièce peut être transférée dans un autre outillage, dit outillage « secondaire » qui permet de contrôler la fin du cycle de refroidissement.

Les inventeurs ont mis en évidence que l'obtention des propriétés mécaniques désirées était liée au contrôle d'un paramètre particulier $V_R$ : ce paramètre désigne la vitesse moyenne de refroidissement entre la température $T_R$ de la pièce à la sortie du four et la température de 400°C. Cette gamme de température entre $T_R$ et 400°C recouvre un intervalle particulier où se produisent les transformations allotropiques conduisant aux microstructures désirées pour les compositions d'aciers selon l'invention.

La vitesse $V_R$ est comprise entre 30 et 80°C/s : lorsque $V_R$ est inférieure à 30°C/s, la structure des pièces est très majoritairement ferritique et un niveau de résistance supérieur à 500MPa ne peut pas toujours être atteint. Lorsque la vitesse $V_R$ est comprise entre 35 et 60°C/s, la variabilité des propriétés mécaniques obtenues est particulièrement réduite.

Lorsque la vitesse est supérieure à 80°C/s, on constate la présence excessive de bainite au sein de la microstructure : les propriétés de ce constituant sont sensibles à une faible variation de $V_R$. En conséquence, une variation locale des conditions de contact entre la pièce et l'outillage, une variation inopinée des conditions de traitement par rapport aux paramètres nominaux, auront pour effet une variabilité des propriétés mécaniques soit au sein d'une pièce donnée, soit d'une pièce à l'autre.

La microstructure selon l'invention est constituée d'au moins 75% de ferrite fine équiaxe, ce pourcentage correspondant à la fraction surfacique qui peut être mesuré par exemple sur une coupe polie et attaquée. Le qualificatif équiaxe désigne une structure dont le rapport moyen entre la plus grande longueur des grains ferritiques et la plus petite longueur, n'excède pas 1,2. Préférentiellement, la taille moyenne de grain ferritique est inférieure à 6 micromètres, de façon à obtenir simultanément une haute résistance et un allongement à rupture très supérieur à 15%.

La structure comporte également de la martensite, dont la fraction surfacique est comprise entre 5 et 20%. Ce constituant se présente sous la forme d'îlots dispersés au sein de la matrice ferritique, la taille de ces îlots. étant généralement inférieure ou égale à celle des grains ferritiques. Sous cette forme fine et dispersée, la présence de 5 à 20% de martensite permet d'accroître la résistance mécanique sans diminution trop marquée de la ductilité.

La structure peut également comporter de la bainite en quantité limitée à 10%. On a montré en effet que la présence de ce constituant n'était pas souhaitable pour la fabrication de pièces qui doivent présenter une grande homogénéité des caractéristiques mécaniques.

Les pièces formées ainsi obtenues peuvent être ensuite éventuellement assemblées par soudage à d'autres éléments, d'épaisseur ou de composition identiques ou différentes, de façon à constituer par exemple une structure plus complexe.

Dans le cas où la tôle ou le flan initial ne comportent pas de pré-revêtement, les pièces formées peuvent naturellement être revêtues après traitement thermique par un revêtement approprié si des exigences contre la corrosion sont requises pour celles-ci.

A titre d'exemple, les modes de réalisation suivants vont illustrer d'autres avantages conférés par l'invention.

Exemple 1:

. On a considéré des tôles d'acier laminées à chaud ou à froid d'épaisseur allant de 1,2 à 2 mm, de composition pondérale suivante :

Tableau 1 : Composition de l'acier (% poids)

| Acier | C | Mn | Si | S | P | Al | Nb | Ti | N | Autres |
|-------|-----|-----|-----|-----|-----|-----|-----|-----|-----|--------|
| A | 0,059 | 1,646 | 0,022 | 0,004 | 0,016 | 0,024 | 0,048 | 0,067 | 0,005 | Cu : 0,009 Mo : 0,003 Ni : 0,016 Ce : 0,027 Ca : 0,003 |
| B | 0,063 | 1,677 | 0,018 | 0,003 | 0,018 | 0,030 | 0,050 | 0,071 | 0,005 | Cr : 0,023 |
| C | 0.125 | 1,444 | 0.384 | 0,002 | 0,020 | 0,030 | 0,003 | 0.011 | 0,005 | Cr : 0,189 |
| D | 0,057 | 0.626 | 0,074 | 0,008 | 0,018 | 0,030 | 0,066 | 0,001 | 0,005 | Ce : 0,021 |

Les valeurs soulignées indiquent des caractéristiques hors invention

Les aciers A et B sont des aciers de composition selon l'invention. Les aciers C et D sont des aciers de référence. La tôle d'acier A laminée à chaud a une épaisseur de 2mm. L'acier B a fait l'objet d'essais sous la forme de tôles laminées à chaud de 2mm d'épaisseur, et de tôles laminées à froid et recuites de 1,5 et 1,2mm d'épaisseur.

Les aciers C et D sont des aciers de référence laminés à froid et recuites de 1,2mm d'épaisseur.

Des tôles de ces différents aciers ont été pré-revêtues au trempé dans un bain fondu d'un alliage d'aluminium comprenant 9,3% de silicium et 2,8 % de fer, le reste étant constitué d'aluminium et d'impuretés inévitables. L'épaisseur du pré-revêtement est de 25 micromètres par face environ. Les tôles ont été ensuite découpées sous forme de flans.

Les flans ont été ensuite chauffés jusqu'à une température $T_R$ pendant un temps de maintien $t_R$ indiqués au tableau 2. Certains aciers ont fait l'objet de plusieurs conditions d'essai tel l'acier B dans des conditions repérées B1 à B3. Les conditions de chauffage conduisent toutes à une transformation austénitique complète des aciers. Durant cette phase de chauffage et de maintien, le pré-revêtement se transforme en une couche alliée, sur l'intégralité de son épaisseur. Ce revêtement allié, à point de fusion élevé et à haute dureté, présente une grande résistance à la corrosion et évite l'oxydation et la décarburation de l'acier de base sous-jacent pendant et après la phase de chauffage.

Après austénitisation, les flans ont été extraits du four la température $T_R$, puis déformés à chaud. On a fait varier la vitesse moyenne de refroidissement $V_R$ dans les conditions indiquées au tableau 2. Les caractéristiques mécaniques mesurées sur les pièces (limite d'élasticité Re, résistance mécanique Rm, allongement à rupture A) ont été également indiquées au tableau 2.

Tableau 2 : Conditions d'austénitisation et de refroidissement. Caractéristiques mécaniques obtenues Les valeurs soulignées indiquent des caractéristiques hors invention

| Acier, condition | $T_R$(°C) | $t_R$ (mn) | $V_R$ (°C/s) | Re (MPa) | Rm (MPa) | Re/Rm | A(%) |
|---|---|---|---|---|---|---|---|
| A1 | 900 | 6 | 45 | 380 | 600 | 0,63 | 22 |
| A2 | 950 | 6 | 45 | 370 | 597 | 0,62 | 22 |
| B1 | 920 | 7 | 30 | 366 | 562 | 0,65 | 22,5 |
| B2 | 930 | 10 | 45 | 409 | 618 | 0,66 | 21,5 |
| B3 | 920 | 7 | <u>100</u> | 470 | 703 | 0,67 | <u>13</u> |
| C1 | 920 | 5 | 35 | 499 | 819 | 0,61 | <u>14,5</u> |
| C2 | 920 | 5 | 50 | 543 | 831 | 0,65 | <u>10</u> |
| C3 | 920 | 5 | <u>90</u> | 1069 | 1358 | 0,78 | <u>5.5</u> |
| D1 | 920 | 6 | 35 | 410 | <u>455</u> | 0,90 | 23,5 |

Les microstructures obtenues après traitement thermique ont été examinées sur coupes polies et attaquées. La taille moyenne de grain ferritique a été déterminée au moyen d'analyses d'images.

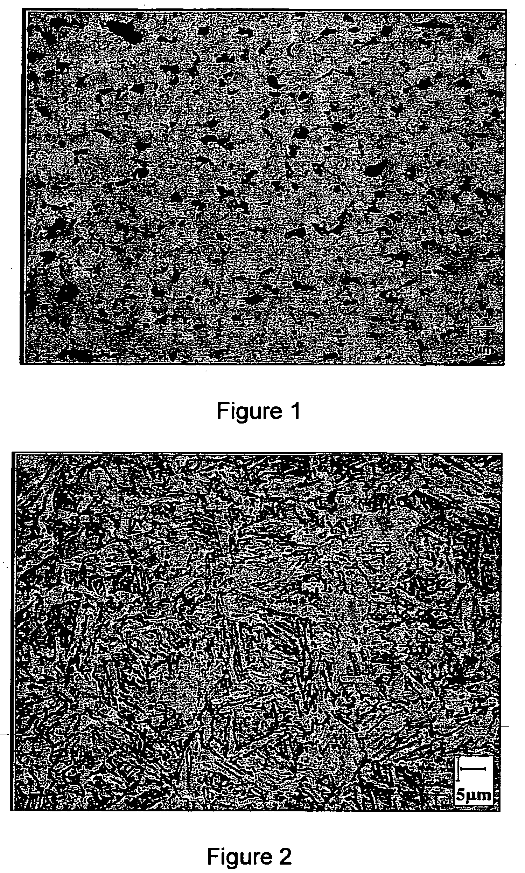

Les essais réalisés sur l'acier A indiquent que les caractéristiques mécaniques dépendent peu de la température d'austénitisation dans la gamme du procédé de l'invention. Une production industrielle sera donc peu sensible à une modification imprévue de ce paramètre. Un exemple de microstructure est présenté à la figure 1. La structure, relative à l'essai B1, est composée de 93% de ferrite équiaxe présentant une taille moyenne de 5 micromètres, et de 7% de martensite.

Les essais A1, A2, B1, B2, conduisent tous à des structures constituées de plus de 75% de ferrite équiaxe, de martensite en quantité comprise entre 5% et 20%, et de moins de 10% de bainite.

Une vitesse de refroidissement trop importante (100°C/s, essai B3) conduit à une proportion de martensite légèrement supérieure à 20%. La martensite est présente sous forme d'îlots pouvant excéder 5 micromètres. L'allongement est alors inférieur à 15%.

L'acier C contient une teneur en carbone et en silicium trop importante, et ne contient pas suffisamment d'éléments de micro-alliage pour un contrôle efficace du grain : même pour des conditions de refroidissement de 35°C/s, la structure n'est pas ferritique mais majoritairement bainitique comme l'illustre la figure 2 relative à l'essai C1. L'allongement est alors inférieur à 15%. Lorsque la vitesse de refroidissement augmente (essais C2 et C3), la structure devient majoritairement martensitique avec des traces de bainite. L'allongement subit une réduction notable.

L'acier D présente une teneur insuffisante en manganèse et en titane et contient une quantité excessive de soufre. En conséquence, la résistance est insuffisante, inférieure à 500MPa dans la condition d'essai D1.

Exemple 2: On a considéré une tôle d'acier B, de composition selon l'invention et détaillée au tableau 1. La tôle de 2mm d'épaisseur est pré-revêtue d'un alliage à base d'aluminium comme exposé dans l'exemple 1. La tôle a été chauffée à 900°C pendant 8 minutes puis emboutie à chaud de façon à fabriquer une pièce. La vitesse de refroidissement $V_R$ est de 60°C/s. Compte tenu de la morphologie de la pièce, la déformation équivalente ε varie selon les différentes zones : certaines parties n'ont pratiquement pas été déformées localement (ε=0%) alors que d'autres ont subi une déformation de 20%. Des observations micrographiques, des mesures de dureté et des éprouvettes de traction ont été prélevées dans ces zones déformées de façon très différente. La limite d'élasticité se situe entre 430 à 475MPa, la résistance entre 580 et 650MPa, l'allongement à rupture entre 17 et 22%. Ainsi, en dépit du fait que le grain austénitique est déformé à chaud de façon plus ou moins intense selon l'endroit considéré, l'acier et le procédé selon l'invention sont caractérisés par le fait que les propriétés restent très homogènes au sein d'une même pièce. En particulier, la résistance et l'allongement à rupture restent supérieurs respectivement à 500MPa et à 15% quel que soit le taux de déformation considéré.

L'invention permet ainsi la fabrication de pièces revêtues à hautes caractéristiques de résistance et de ductilité, présentant ces caractéristiques de façon homogène dans l'ensemble des pièces. Les aciers selon l'invention sont peu sensibles à une modification des paramètres de fabrication, ce qui présente un avantage en cas d'attente imprévue sur ligne de fabrication, ou en cas de changement de fabrication (pièces de différentes épaisseurs passant successivement au sein d'un même four par exemple).

Ces pièces seront utilisées avec profit pour la fabrication de pièces de sécurité, et notamment de pièces structurales ou de renfort, pour la construction de véhicules automobiles, et dans le domaine du machinisme agricole ou de la construction navale.

## Revendications

1. Pièce obtenue par déformation et refroidissement au sein d'un outillage, d'une tôle ou d'un flan en acier, pré-revêtu à titre optionnel, dont la composition comprend, les teneurs étant exprimées en poids :

$$0,040\% \leq C \leq 0,100\%$$

$$0,80\% \leq Mn \leq 2,00\%$$

$$Si \leq 0,30\%$$

$$S \leq 0,005\%$$

$$P \leq 0,030\%$$

$$0,010\% \leq Al \leq 0,070\%$$

$$0,015\% \leq Nb \leq 0,100\%$$

$$0,030\% \leq Ti \leq 0,080\%$$

$$N \leq 0,009\%$$

$$Cu \leq 0,100\%$$

$$Ni \leq 0,100\%$$

$$Cr \leq 0,100\%$$

$$Mo \leq 0,100\%$$

$$Ca \leq 0,006\%,$$

le reste de la composition étant constitué de fer et d'impuretés inévitables résultant de l'élaboration, la microstructure dudit acier étant constituée d'au moins 75% de ferrite équiaxe, de martensite en quantité supérieure ou égale à 5% et inférieure ou égale à 20%, et de bainite en quantité inférieure ou égale à 10%

2. Pièce en acier selon la revendication 1, **caractérisé en ce que** la composition dudit acier comprend, les teneurs étant exprimées en poids :

$$0,050\% \leq C \leq 0,080\%$$

$$1,20\% \leq Mn \leq 1,70\%$$

$$Si \leq 0,070\%$$

$$S \leq 0,004\%$$

$$P \leq 0,020\%$$

$$0,020\% \leq Al \leq 0,040\%$$

$$0,030\% \leq Nb \leq 0,070\%$$

$$0,060\% \leq Ti \leq 0,080\%$$

$$N \leq 0,009\%$$

$$Cu \leq 0,100\%$$

$$Ni \leq 0,100\%$$

$$Cr \leq 0,100\%$$

$$Mo \leq 0,100\%$$

$$Ca \leq 0,005\%$$

le reste de la composition étant constitué de fer et d'impuretés inévitables résultant de l'élaboration

3. Pièce en acier selon la revendication 1 ou 2, **caractérisée en ce que** la taille moyenne de grain ferritique dudit acier est inférieure à 6 micromètres

4. Pièce en acier selon l'une quelconque des revendications 1 à 3, **caractérisée en ce que** ladite pièce est revêtue d'une couche alliée sur la totalité de l'épaisseur de ladite couche, ladite couche alliée résultant d'au moins un traitement thermique d'alliation entre ledit acier et un pré-revêtement, ledit pré-revêtement étant un alliage à base de zinc ou d'aluminium

5. Pièce en acier selon l'une quelconque des revendications 1 à 4, **caractérisée en ce que** sa résistance est supérieure ou égale à 500MPa et son allongement à rupture est supérieur à 15%

6. Objet soudé, dont l'une au moins des parties est une pièce selon l'une quelconque des revendications 1 à 5

7. Procédé de fabrication d'une pièce en acier revêtu, la microstructure dudit acier étant constituée d'au moins 75% de ferrite équiaxe, de martensite en quantité supérieure ou égale à 5% et inférieure ou égale à 20%, et de bainite en quantité inférieure ou égale à 10%, comportant les étapes selon lesquelles :

   - on approvisionne une tôle d'acier laminée à chaud ou laminée à froid, de composition selon la revendication 1 ou 2, puis
   - on effectue un pré-revêtement de ladite tôle, ledit pré-revêtement étant un alliage à base de zinc ou d'aluminium, puis
   - on découpe ladite tôle pour obtenir un flan, puis
   - on soude éventuellement ledit flan, puis
   - on déforme éventuellement à froid ledit flan, puis
   - on chauffe ledit flan à une température $T_R$ dans un four de manière à former, par alliation entre ledit acier et ledit pré-revêtement, une couche alliée à la surface dudit flan, l'alliation étant réalisée sur la totalité de ladite couche, et de manière à conférer une structure totalement austénitique audit acier, puis
   - on extrait ledit flan du four, puis
   - on déforme éventuellement ledit flan à chaud pour obtenir une pièce, puis
   - on refroidit ladite pièce au sein d'un outillage dans des conditions propres à conférer une résistance mécanique supérieure à 500MPa et un allongement à rupture supérieur à 15% à ladite pièce d'acier.

8. Procédé de fabrication d'une pièce en acier, la microstructure dudit acier étant constituée d'au moins 75% de ferrite équiaxe, de martensite en quantité supérieure ou égale à 5% et inférieure ou égale à 20%, et de bainite en quantité inférieure ou égale à 10%, comportant les étapes selon lesquelles :

   - on approvisionne une tôle d'acier laminée à chaud ou laminée à froid, de composition selon la revendication 1 ou 2, puis
   - on découpe ladite tôle pour obtenir un flan, puis
   - on soude éventuellement ledit flan, puis
   - on déforme éventuellement à froid ledit flan, puis
   - on chauffe ledit flan à une température $T_R$ dans un four de manière à conférer une structure totalement austénitique audit acier, puis
   - on extrait ledit flan du four, puis
   - on déforme éventuellement ledit flan à chaud pour obtenir une pièce, puis
   - on refroidit ladite pièce au sein d'une résistance mécanique supérieur à 500 MPa et un allongement à rupture supérieur à 15% à un outillage dans des conditions propres à conférer ladite pièce d'acier, puis
   - on effectue éventuellement un revêtement de ladite pièce

9. Procédé de fabrication selon la revendication 7 ou 8, **caractérisé en ce que** ladite température $T_R$ est comprise entre 880 et 950°C, le temps de maintien $t_R$ à ladite température étant compris entre 3 et 10 minutes

**10.** Procédé de fabrication selon l'une quelconque des revendications 7 à 9, **caractérisé en ce que** la vitesse moyenne de refroidissement $V_R$ entre ladite température $T_R$ et 400°C, est comprise entre 30 et 80°C/s

**11.** Procédé de fabrication selon l'une quelconque des revendications 7 à 9, **caractérisé en ce que** la vitesse moyenne de refroidissement $V_R$ entre la température $T_R$ et 400°C, est comprise entre 35 et 60°C/s

**12.** Utilisation d'une pièce ou d'un objet selon l'une quelconque des revendications 1 à 6, ou fabriquée selon l'une quelconque des revendications 7 à 11, pour la fabrication de pièces de structures ou de sécurité pour véhicule terrestre à moteur, pour le domaine du machinisme agricole ou de la construction navale

**Claims**

**1.** Part obtained by deforming, and cooling in a tool, an optionally precoated steel sheet or blank, the composition of which steel comprises, the contents being expressed by weight:

$$0.040\% \leq C \leq 0.100\%$$

$$0.80\% \leq Mn \leq 2.00\%$$

$$Si \leq 0.30\%$$

$$S \leq 0.005\%$$

$$P \leq 0.030\%$$

$$0.010\% \leq Al \leq 0.070\%$$

$$0.015\% \leq Nb \leq 0.100\%$$

$$0.030\% \leq Ti \leq 0.080\%$$

$$N \leq 0.009\%$$

$$Cu \leq 0.100\%$$

$$Ni \leq 0.100\%$$

$$Cr \leq 0.100\%$$

$$Mo \leq 0.100\%$$

$$Ca \leq 0.006\%,$$

the balance of the composition consisting of iron and inevitable impurities resulting from the smelting, the microstructure of said steel consisting of at least 75% equiaxed ferrite, martensite in an amount not less than 5% but not exceeding 20%, and bainite in an amount not exceeding 10%.

2. Steel part according to Claim 1, **characterized in that** the composition of said steel comprises, the contents being expressed by weight:

$$0.050\% \leq C \leq 0.080\%$$

$$1.20\% \leq Mn \leq 1.70\%$$

$$Si \leq 0.070\%$$

$$S \leq 0.004\%$$

$$P \leq 0.020\%$$

$$0.020\% \leq Al \leq 0.040\%$$

$$0.030\% \leq Nb \leq 0.070\%$$

$$0.060\% \leq Ti \leq 0.080\%$$

$$N \leq 0.009\%$$

$$Cu \leq 0.100\%$$

$$Ni \leq 0.100\%$$

$$Cr \leq 0.100\%$$

$$Mo \leq 0.100\%$$

$$Ca \leq 0.005\%,$$

the balance of the composition consisting of iron and inevitable impurities resitting from the smelting.

3. Steel part according to Claim 1 or 2, **characterized in that** the mean ferrite grain size of said steel is less than 6 microns.

**4.** Steel part according to any one of Claims 1 to 3, **characterized in that** said part is coated with a layer alloyed over the entire thickness of said layer, said alloyed layer resulting from at least one heat treatment for alloying between said steel and a precoating, said precoating being an alloy based on zinc or aluminum.

**5.** Steel part according to any one of Claims 1 to 4, characterized tin that its strength is greater than or equal to 500 MPa and its elongation at break is greater than 15%.

**6.** Welded article, at least one of the portions of which is a part according to any one of Claims 1 to 5.

**7.** Process for manufacturing a coated steel part, the microstructure of said steel consisting of at least z equiaxed ferrite, martensite in an amount not less than 5% but not exceeding 20%, and ba-nite in an amount not exceeding 10% comprising the steps in which:

- a hot-rolled or cold-rolled steel sheet with a composition according to claim 1 or 2 is supplied; then
- a precoating is applied to said sheet, said precoating being an alloy based on zinc for aluminum; then
- said sheet is cut so as to obtain a blank; then
- optionally, said blank is welded; then
- optionally, said blank is cold-deformed; then
- said blank is heated to a temperature $T_c$ in a furnace so as to form, by alloying between said steel and said precoating, an alloyed layer on the surface of said blank, the alloying being produced over the entire thickness of said layer, and so as to give said steel an entirely austenitic structure; then
- said blank is removed from the furnace; then
- optionally, said blank is hot-deformed so as to obtain a part; and then
- said part is cooled within a tool under conditions suitable for giving said steel part a tensile strength greater than 500 MPa and an elongation at break greater than 15%.

**8.** Process for manufacturing a steel part, the microstructure of said steel consisting of at least 75% equiaxed ferrite, martensite in an amount not less than 5% but not exceeding 20%, and bainite in an amount not exceeding 10% comprising the steps in which:

- a hot-rolled or cold-rolled steel sheet with a composition according to claim 1 or 2 is supplied; then
- said sheet is cut so as to obtain a blank; then
- optionally, said blank is welded; then
- optionally, said blank is cold-deformed; then
- said blank is heated to a temperature $T_c$ in a furnace so as to give said steel a completely austenitic structure; then
- said blank is removed from the furnace; then
- optionally, said blank is hot-deformed so as to obtain a part; then
- said part is cooled in a tool under conditions suitable for giving said steel part a tensile strength greater than 500 MPa and an elongation at break greater than 15%; and then
- optionally, a coating is applied to said part.

**9.** Manufacturing process according to claim 7 or 8, **characterized in that** said temperature $T_c$ is between 880 and 950°C, the soak time $t_c$ at said temperature being between 3 and 10 minutes.

**10.** Manufacturing process according to any one of Claims 7 to 9, **characterized in that** the average cooling rate $V_c$ between said temperature $T_c$ and 400°C is between 30 and 80°C/s.

**11.** Manufacturing process according to any one of Claims 7 to 9, **characterized in that** the average cooling rate $V_c$ between said temperature $T_c$ and 400°C is between 35 and 60°C/s.

**12.** Use of a part or article according to any one of Claims 1 to 6, or manufactured according to any one of Claims 7 to 11, for the manufacture of structural or safety parts for a land motor vehicle or for the agricultural machinery or shipbuilding field.

**Patentansprüche**

**1.** Teil, das durch Verformen und Kühlen in einer Werkzeugausrüstung eines Stahlblechs oder Stahlzuschnitts, das bzw. der optional im Voraus beschichtet worden ist, erhalten wird, dessen Zusammensetzung ausgedrückt in Gewichtsprozent Folgendes umfasst:

$$0,040\ \% \leq C \leq 0,100\ \%$$

$$0,80\ \% \leq Mn \leq 2,00\ \%$$

$$Si \leq 0,30\ \%$$

$$S \leq 0,005\ \%$$

$$P \leq 0,030\ \%$$

$$0,010\ \% \leq Al \leq 0,070\ \%$$

$$0,015\ \% \leq Nb \leq 0,100\ \%$$

$$0,030\ \% \leq Ti \leq 0,080\ \%$$

$$N \leq 0,009\ \%$$

$$Cu \leq 0,100\ \%$$

$$Ni \leq 0,100\ \%$$

$$Cr \leq 0,100\ \%$$

$$Mo \leq 0,100\ \%$$

$$Ca \leq 0,006\ \%,$$

wobei der Rest der Zusammensetzung gebildet ist aus Eisen und aus unvermeidlichen Verunreinigungen, die sich aus der Bearbeitung ergeben, wobei die Mikrostruktur des Stahls gebildet ist aus wenigstens 75 % gleichgerichtetes Ferrit, aus Martensit in einer Menge größer oder gleich 5 % rund kleiner oder gleich 20 % und aus Bainit in einer Menge kleiner oder gleich 10 %.

2. Stahlteil nach Anspruch 1, **dadurch gekennzeichnet, dass** die Zusammensetzung des Stahls ausgedrückt in Gewichtsprozent Folgendes umfasst:

$$0,050\ \% \leq C \leq 0,080\ \%$$

$$1,20\ \% \leq Mn \leq 1,70\ \%$$

$$Si \leq 0,070\ \%$$

$$S \leq 0,004\ \%$$

$$P \leq 0,020\ \%$$

$$0,020\ \% \leq Al \leq 0,040\ \%$$

$$0,030\ \% \leq Nb \leq 0,070\ \%$$

$$0,060\ \% \leq Ti \leq 0,080\ \%$$

$$N \leq 0,009\ \%$$

$$Cu \leq 0,100\ \%$$

$$Ni \leq 0,100\ \%$$

$$Cr \leq 0,100\ \%$$

$$Mo \leq 0,100\ \%$$

$$Ca \leq 0,005\ \%,$$

wobei der Rest der Zusammensetzung aus Eisen und aus unvermeidbaren Verunreinigungen, die sich aus der Bearbeitung ergeben, gebildet ist.

3. Stahlteil nach Anspruch 1 oder 2, **dadurch gekennzeichnet, dass** die mittlere Ferritkorngröße des Stahls kleiner als 6 Mikrometer ist.

4. Stahlteil nach einem der Ansprüche 1 bis 3, **dadurch gekennzeichnet, dass** das Teil mit einer Schicht, die über die gesamte Schichtdicke auflegiert ist, beschichtet ist, wobei sich die auflegierte Schicht aus wenigstens einer thermischen Legierungsbehandlung zwischen dem Stahl und einer Vorbeschichtung ergibt, wobei die Vorbeschichtung eine Legierung auf Zink- oder Aluminiumbasis ist.

5. Stahlteil nach einem der Ansprüche 1 bis 4, **dadurch gekennzeichnet, dass** sein Widerstand größer oder gleich 500 MPa ist und seine Bruchdehnung größer als 15% ist.

6. Geschweißtes Objekt, bei dem wenigstens einer der Bestandteile ein Teil nach einem der Ansprüche 1 bis 5 ist.

7. Verfahren zum Herstellen eines Teils aus beschichtetem Stahl, wobei die Mikrostruktur des Stahls aus wenigstens 75 % gleichgerichtetes Ferrit, aus Martensit in einer Menge größer oder gleich 5 % und kleiner oder gleich 20 % und aus Bainit in einer Menge kleiner oder gleich 10 % gebildet ist, das die folgenden Schritte umfasst:

- Vorsehen eines warmlaminierten oder kaltlaminierten Stahlblechs mit einer Zusammensetzung nach Anspruch 1 oder 2, dann
- Ausführen eines Vorbeschichtens des Blechs, wobei die Vorbeschichtung eine Legierung auf Zink- oder Aluminiumbasis ist, dann
- Zerschneiden des Blechs, um einen Zuschnitt zu erhalten, dann
- eventuell Schweißen des Zuschnitts, dann
- eventuell Kaltverformen des Zuschnitts, dann
- Erwärmen des Zuschnitts auf ein Temperatur $T_R$ in einem, Ofen, derart, dass durch Legierung zwischen dem Stahl und der Vorbeschichtung auf der Oberfläche des Zuschnitts eine auflegierte Schicht gebildet wird, wobei die Legierung in der gesamten Schicht verwirklicht wird, und derart, dass dem Stahl eine vollständig austenitische Struktur verliehen wird, wann
- Entnehmen des Zuschnitts aus dem Ofen, dann
- eventuelles Warmverformen des Zuschnitts, um ein Teil zu erhalten, dann
- Abkühlen des Teils in einer Werkzeugausrüstung unter Bedingungen, die geeignet sind, dem Stahlteil einen mechanischen Widerstand größer als 500 MPa und eine Bruchdehnung größer als 15 % zu verleihen.

8. Verfahren zum Herstellen eines Stahlteils, wobei die Mikrostruktur des Stahls aus wenigstens 75 % gleichgerichtetes Ferrit, aus Martensit in einer Menge größer oder gleich 5 % oder kleiner oder gleich 20 % und aus Bainit in einer Menge kleiner oder gleich 10 % gebildet ist, das die folgenden Schritte umfasst:

- Vorsehen eines warmlaminierten oder kaltlaminierten Stahlblechs mit einer Zusammensetzung nach Anspruch 1 oder 2, dann
- Zerschneiden des Blechs, um einen Zuschnitt zu erhalten, dann
- eventuell Schweißen des Zuschnitts, dann
- eventuell Kaltverformen des Zuschnitts, dann
- Erwärmen des Zuschnitts auf eine Temperatur $T_R$ in einen Ofen, derart, dass dem Stahl eine vollständig austenitische Struktur verliehen wird, dann
- Entnehmen des Zuschnitts aus dem Ofen, dann
- eventuell Warmverformen des Zuschnitts, um ein Teil zu erhalten, dann
- Abkühlen des Teils in einer Werkzeugausrüstung unter Bedingungen, die geeignet sind, um dem Stahlteil einen mechanischen Widerstand größer als 500 MPa und eine Bruchdehnung größer als 15 % zu verleihen, dann
- eventuell Ausführen eines Beschichtens des Teils.

9. Fertigungsverfahren nach Anspruch 7 oder 8, **dadurch gekennzeichnet, dass** die Temperatur $T_R$ im Bereich von 880 bis 950 °C liegt, wobei die Zeit $t_R$ des Haltens auf der Temperatur im Bereich von 3 bis 10 Minuten liegt.

10. Fertigungsverfahren nach einem der Ansprüche 7 bis 9, **dadurch gekennzeichnet, dass** die mittlere Abkühlungsgeschwindigkeit $V_R$ zwischen der Temperatur $T_R$ und 400 °C im Bereich von 30 bis 80 °C/s liegt.

11. Fertigungsverfahren nach einem der Ansprüche 7 bis 9, **dadurch gekennzeichnet, dass** die mittlere Abkühlungsgeschwindigkeit $V_R$ zwischen der Temperatur $T_R$ und 400 °C im Bereich von 35 bis 60 °C/s liegt.

12. Verwendung eines Teils oder eines Objekts nach einem der Ansprüche 1 bis 6 oder gefertigt nach einem der Ansprüche 7 bis 11 für die Herstellung von Struktur- oder Sicherheitsteilen für ein terrestrisches Kraftfahrzeug im Gebiet landwirtschaftlicher Maschinen oder in Schiffbau.

Figure 1

Figure 2

## RÉFÉRENCES CITÉES DANS LA DESCRIPTION

**Documents brevets cités dans la description**

- FR 2780984
- EP 1146132 A
- EP 1195447 A
- EP 1767659 A
- EP 1143029 A
- FR 2833504
- EP 1013785 A